# EUROPÄISCHE PATENTSCHRIFT

(11) **EP 1 645 155 B1**
(45) Veröffentlichungstag und Bekanntmachung des Hinweises auf die Patenterteilung: **06.06.2012**
(21) Anmeldenummer: 04730267.4
(22) Anmeldetag: 29.04.2004
(51) Int. Cl.: H04W 76/04

(54) **VERFAHREN ZUR STEUERUNG DER EINER MOBILSTATION ZUGEORDNETEN FUNKRESSOURCEN UND FUNK-KOMMUNIKATIONSSYSTEM**
METHOD FOR CONTROLLING RADIO RESOURCES ASSOCIATED WITH A MOBILE STATION, AND RADIO COMMUNICATION SYSTEM
PROCEDE DE COMMANDE DE RESSOURCES RADIO ASSOCIEES A UNE STATION MOBILE, ET SYSTEME DE COMMUNICATION RADIO

(30) Priorität: 10.07.2003 DE 10331319
(43) Veröffentlichungstag der Anmeldung: 12.04.2006
(73) Patentinhaber: SIEMENS AKTIENGESELLSCHAFT, 80333 München (DE)
(72) Erfinder: BIENAS, Maik, 30519 Hannover (DE); CHOI, Hyung-Nam, 22117 Hamburg (DE); ECKERT, Michael, 38122 Braunschweig (DE)
(86) Internationale Anmeldenummer: PCT/EP2004/050650
(87) Internationale Veröffentlichungsnummer: WO 2005/006799

(56) Entgegenhaltungen:
- EP-A- 1 377 096
- US-A1- 2002 160 781
- US-A1- 2003 050 097
- "Universal Mobile Telecommunications System (UMTS); RRC Protocol Specification (3G TS 25.331 version 3.2.0 Release 1999); ETSI TS 125 331" ETSI STANDARDS, EUROPEAN TELECOMMUNICATIONS STANDARDS INSTITUTE, SOPHIA-ANTIPO, FR, Bd. 3-R2, Nr. V320, März 2000 (2000-03), XP014008794 ISSN: 0000-0001

## Beschreibung

Die Erfindung betrifft ein Verfahren zur Steuerung der einer Mobilstation zugeordneten Funkressourcen und ein entsprechendes Funk-Kommunikationssystem, ein UMTS (Universal Mobile Telecommunications System).

Die rasante technische Entwicklung auf dem Gebiet der Mobilkommunikation hat nach der globalen Etablierung des GSM (Global System for Mobile Communications) - Standards zur Entwicklung einer dritten Generation von Mobilfunksystemen und hier insbesondere zur Entwicklung des UMTS (Universal Mobile Telecommunications System) -Standards geführt.

In einem UMTS sind für die Übertragung über die Luftschnittstelle zwei verschiedene Modi vorgesehen: Beim FDD-Mode erfolgt die Übertragung in Uplink (von Mobilstation zu Basisstation) und Downlink (von Basisstation zu Mobilstation) auf unterschiedlichen Trägerfrequenzen, beim TDD-Mode wird für beide Richtungen die gleiche Trägerfrequenz verwendet; eine Trennung der Up- und Downlink-Richtung erfolgt im TDD-Mode durch die Nutzung verschiedener Zeitschlitze.

Die zur Übertragung von Daten zwischen verschiedenen Mobilstationen und einer Basisstation zur Verfügung stehenden physikalischen Übertragungsressourcen werden durch den Einsatz von Mehrfachzugriffsverfahren auf physikalische Kanäle aufgeteilt, die dann bestimmten Transportkanälen zugeordnet werden.

In einem UMTS, basierend auf den FDD-Mode, ist ein physikalischer Kanal bestimmt durch eine Zuordnung von der Trägerfrequenz, den Spreizcode (Channelization Codes), der den Daten, die über diesen physikalischen Kanal übertragen werden, aufgeprägt ist, sowie in der Uplink-Richtung von der relativen Phase (I/Q).

Für die Übertragung von Informationen stehen in einem UMTS zwei Arten von Transportkanälen zur Verfügung: Dedizierte Kanäle (Dedicated Channels) und gemeinsame Kanäle (Common Channels). Bei den dedizierten Kanälen wird eine physikalische Übertragungsressource (Funkressource) nur für die Übertragung von Informationen für eine bestimmte Mobilstation reserviert. Über die gemeinsamen Kanäle können Informationen übertragen werden, die an alle Mobilstationen in einer Funkzelle gerichtet sind (z.B. der Broadcast Channel BCH) oder die von allen Mobilstationen in einer Funkzelle kommen können (z.B. der Random Access Channel RACH). Im zweiten Fall muss auf dem gemeinsamen Kanal noch mitübertragen werden, von welcher Mobilstation die Information stammt.

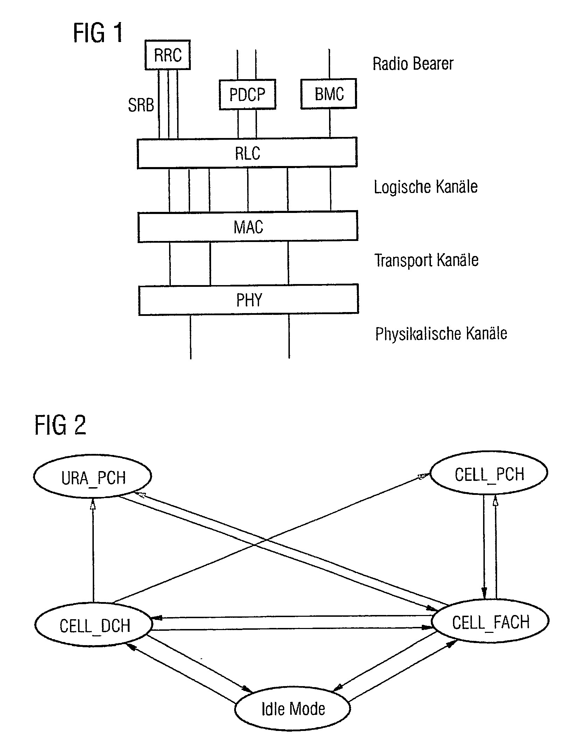

Die UMTS Luftschnittstelle kann - wie in Figur 1 gezeigt - als übereinander geschichtete Protokolle dargestellt werden. Beispielsweise realisiert eine Mobilstation dabei eine physikalische Schicht PHY, die senderseitig für die Verarbeitung der Daten zur Übertragung über die Luftschnittstelle über physikalische Kanäle verantwortlich ist und empfangsseitig die empfangenen Daten so an die darüber liegende Medienzugangskontrollschicht MAC (Medium Access Control) weitergibt, dass sie von dieser Schicht weiterverarbeitet werden können. Netzwerkseitig befindet sich eine physikalische Schicht PHY in der Basisstation, welche über eine Festnetzverbindung mit der Funknetzwerk Kontrolleinheit RNC (Radio Network Controller, Funkkontrolleinheit) verbunden ist.

Die Verbindungen zwischen der physikalischen Schicht und der MAC Schicht werden Transportkanäle genannt und geben an, wie die Daten über die Luftschnittstelle übertragen werden sollen. Die MAC Schicht hat Aufgaben wie die Identifizierung der Nutzer, für die ein Paket bestimmt ist, falls es auf den gemeinsamen Kanälen übertragen wird, sowie die Abbildung der logischen Kanäle auf die Transportkanäle. Dafür fügt die MAC Schicht senderseitig Kontrollinformationen (z.B. Identität der Mobilfunkstation) zu den Paketen hinzu, die sie von der RLC Schicht erhalten hat. Empfangsseitig werden diese Kontrollinformationen ausgewertet und wieder von den Paketen entfernt, bevor diese über die logischen Verbindungen an die RLC Schicht weitergeleitet werden. Als logische Kanäle werden die Verbindungen zwischen der MAC Schicht und der darüber liegenden Funkverbindungskontrollschicht RLC (Radio Link Control) bezeichnet. Die RLC Schicht ist verantwortlich für die Überwachung der Datenübertragung, d.h. für die Feststellung von fehlenden Paketen und eventuell deren erneute Anforderung. Die RLC Schicht ist dabei so modelliert, dass es eine eigenständige RLC-Entität pro Radio Bearer RB bzw. Signalling Radio Bearer SRB gibt. Auch die RLC Schicht kann senderseitig den Paketen, die sie von höheren Schichten bekommen hat, Kontrollinformationen hinzufügen. Diese Kontrollinformationen werden empfangsseitig genutzt um z.B. zu beurteilen, ob Pakete fehlen. Diese Kontrollinformationen werden von den Paketen entfernt, bevor diese wieder an die höheren Schichten weitergeleitet werden.

Oberhalb der RLC Schicht befindet sich die Funkressourcen Kontrollschicht RRC (Radio Resource Control), die für die Konfiguration der unter ihr liegenden Schichten und vor allem für den Verbindungsaufbau und -abbau verantwortlich ist. Hierzu tauschen die RRC-Einheiten in der Mobilstation und dem RNC über die Signalling Radio Bearer SRB entsprechende RRC-Nachrichten aus.

Des Weiteren befinden sich oberhalb der RLC Schicht die so genannten RB (Radio Bearer), die für die eigentliche Nutzdatenübertragung verwendet werden und die Verbindung zu darüber liegenden Anwendungen darstellen. Werden Paketdaten übertragen, befindet sich oberhalb von RLC noch die Paketdaten Konvergenzschicht PDCP (Packet Data Convergence Protocol), die u. a. für die Komprimierung von IP (Internet Protokoll) Paketen verantwortlich ist. Weiterhin befindet sich oberhalb der RLC Schicht noch die so genannte Broadcast Multicast Kontrollschicht BMC (Broadcast Multicast Control), welche MSseitig für den Empfang von Cell Broadcast Nachrichten verwendet wird.

Zur effizienten Kontrolle der einer Mobilstation zugeordneten Funkressourcen in einer Zelle sind in der RRC Schicht die fünf folgenden Zustände (Betriebszustände) definiert, die sich durch die Art der allokierten Ressourcen unterscheiden, d.h. die Art der für die Mobilstation zur Verfügung stehenden Ressourcen.

Im RRC Zustand **IDLE Mode** besteht keine Signalisierungs- und keine Datenverbindung zwischen Mobilstation und RNC. Mobilstation ist im UTRAN (UMTS Terrestrial Radio Access Network) gar nicht und im Kernnetz CN (Core Network) nur auf RA (Routing Area) bzw. Location Area (LA) Ebene bekannt. Im Idle Mode kann eine Mobilstation Systeminformationen auf dem Broadcastkanal BCH lesen und empfängt Benachrichtigungen über den Kanal PCH (Paging Channel).

Im RRC Zustand **CELL_PCH state** (gemeinsamer Funkruf-Signalisierungszustand 1) besteht eine logische Signalisierungsverbindung zwischen Mobilstation und RNC. In diesem Zustand kann die Mobilstation Broadcast Nachrichten vom Netzwerk empfangen und hört auf den Benachrichtigungskanal PCH. Die Mobilfunkstation ist in diesem Zustand auf Zellebene bekannt.

Der RRC Zustand **URA_PCH state** (gemeinsamer Funkruf-Signalisierungszustand 2) ist ähnlich dem CELL_PCH state mit dem Unterschied, dass das Netzwerk lediglich Kenntnis hat, in welcher Gruppe von Zellen URA (UTRAN Registration Area) sich die Mobilfunkstation aufhält.

Im RRC Zustand **CELL_FACH state** (gemeinsamer Datenzustand) besteht eine physikalische Signalisierungs- und Datenverbindung zwischen Mobilstation und RNC. In diesem Zustand sind der Mobilstation gemeinsame Ressourcen zugewiesen, die sie sich mit anderen Mobilfunkstationen teilen muss, z.B. RACH im Uplink und FACH im Downlink. In diesem Zustand ist die Mobilfunkstation ebenfalls auf Zellebene bekannt.

Im RRC Zustand **CELL_DCH state** (dedizierter Datenzustand) besteht eine physikalische Signalisierungs- und Datenverbindung zwischen Mobilstation und RNC. In diesem Zustand sind der Mobilstation dedizierte Ressourcen zugewiesen und die Mobilstation ist auf Zellebene bekannt.

Die nach dem Stand der Technik möglichen Übergänge zwischen den RRC Protokoll Zuständen sind in Figur 2 dargestellt [1].

Im Rahmen dieser Erfindung wird insbesondere der Übergang zwischen den RRC Protokoll-Zuständen CELL_ DCH und CELL_PCH/URA_PCH betrachtet. Die RRC-Zustandsübergänge werden von RNC kontrolliert und können daher nur auf relativ langsamer Zeitbasis erfolgen.

Aufgrund der vorteilhaften Eigenschaften von dedizierten Transportkanälen gegenüber den gemeinsamen Transportkanälen, wie bspw. die geringe Übertragungsverzögerung, die höhere Übertragungskapazität, die Leistungseffizienz durch eine geschlossene Leistungsregelung und der Gewinn durch Makro-Diversität, werden einer MS von der RNC in der Regel für eine Funkverbindung dedizierte Funkressourcen allokiert. Allerdings besteht in diesem Fall das Problem der eingeschränkten Verfügbarkeit dieser Ressourcen in Downlink-Richtung, d.h. die maximale Anzahl von möglichen dedizierten physikalischen Funkverbindungen ist durch die begrenzte Anzahl von verfügbaren Downlink Scrambling Codes eingeschränkt, wobei pro Scrambling Code der ganze OVSF-Spreizcodebaum verwendet werden kann. Maximal können pro Funkzelle 16 Downlink Scrambling Codes verwendet werden, d.h. 1 Primary Scrambling Code (PSC) und bis zu 15 Secondary Scrambling Codes (SSC).

Wenn daher eine Mobilstation im CELL_DCH state eine bestimmte Zeit keine Daten mehr über die dedizierten Ressourcen (Funkressourcen) empfängt bzw. sendet, kann das Netzwerk durch explizite Signalisierung auf RRC-Ebene einen Übergang der Mobilstation vom CELL_DCH zum CELL_PCH oder URA_PCH state anordnen. Falls wieder eine dedizierte Funkverbindung aufgebaut werden muss, d.h. der Übergang von CELL_PCH/URA_PCH zu CELL_DCH, wird dies der Mobilstation vom Netzwerk durch entsprechende RRC-Signalisierung angeordnet.

Nach dem Stand der Technik wird für den Übergang von CELL_PCH oder URA_PCH state zum CELL_DCH state ein ,Umweg' über den CELL_FACH state gegangen. Nach dem Stand der Technik benachrichtigt das Netzwerk die Mobilstation im CELL_PCH oder URA_PCH state über den Benachrichtigungskanal PCH, dass wieder Daten zur Übertragung anstehen (z.B. im Fall eines eingehenden Gespräches). Die Mobilstation wechselt daraufhin in den CELL_FACH state und sendet im Uplink eine Bestätigung auf den gemeinsamen Kanal RACH. Daraufhin empfängt die Mobilstation vom RNC über den gemeinsamen Kanal FACH Informationen über den bevorstehenden RRC-State-Wechsel (RRC state indicator = CELL_DCR) und über die neu allokierten dedizierten Ressourcen.

Dieser nachteilige Umweg über den CELL_FACH state ist nach dem Stand der Technik notwendig, da eine Mobilstation beim Übergang vom CELL_DCH state zum CELL_PCH oder URA_PCH state die Informationen über die dedizierten Ressourcen löscht, so dass diese Ressourcen für den Aufbau einer anderen dedizierten Funkverbindung wiederverwendet werden können.

Der Erfindung liegt daher die Aufgabe zugrunde, eine technische Lehre anzugeben, die einen schnellen Übergang vom CELL_PCH state bzw. URA-PCH state zum CELL_DCH state ermöglicht.

Diese Aufgabe wird durch die Merkmale des unabhängigen Anspruchs gelöst. Vorteilhafte und zweckmäßige Weiterbildungen ergeben sich aus den abhängigen Ansprüchen. Die Erfindung umfasst dabei auch Funk-Kommunikationssysteme, die entsprechend den abhängigen Verfahrensansprüchen weitergebildet sind.

Die Erfindung basiert demnach auch auf dem Gedanken, in der Mobilstation und der RNC (Funkkontrolleinheit) die Informationen (Funkressourcen-Informationen) der 'alten' DCH Ressourcen für den Uplink und Downlink, wie beispielsweise der Spreizfaktor, die Channelisation Code-Nummer und der Scrambling Code etc., beim Übergang der Mobilstation zum CELL_PCH bzw. URA_PCH state zuspeichern.

Vor einem Schalten der Mobilstation in den CELL_DCH state wird von der Funkkontrolleinheit überprüft, ob die 'alten' Funkressourcen-Informationen verfügbar sind. Wenn diese verfügbar sind, dann werden sie der Mobilstation zugewiesen.

Dadurch wird ein schneller Übergang vom CELL_PCH bzw. URA_PCH state zum CELL_DCH state ermöglicht. Dies ist insbesondere für eine effiziente Paketdatenübertragung im Uplink von Vorteil.

In Tabelle 1 sind beispielsweise für ein Anwendungsszenario im UMTS FDD-Modus die Parameter der dedizierten physikalischen Ressourcen (Funkressourcen-Informationen) dargestellt. Hierbei wird beispielsweise ein Szenario angenommen, in der die MS für den Uplink und Downlink jeweils ein 128kbps Paketdienst nutzt.

**Tabelle 1: Konfiguration der dedizierten physikalischen Ressourcen in Uplink und Downlink**

| **Parameter** | **Wert** |
|---|---|
| Uplink: | |
| >Scrambling Code-Typ: | Long |
| >Scrambling Code-Nummer: | 214 |
| >Spreizfaktor: | 8 |
| Downlink: | |
| >Scrambling Code-Nummer: | 1 (=Secondary Scrambling Code 1) |
| >Spreizfaktor: | 16 |
| >Channelisation Code-Nummer: | 11 |

Wenn die alten Parameter (d.h. die Informationen über die dedizierten Ressourcen vor dem Wechsel in den CELL_PCH bzw. URA_PCH state) bei einem erneuten RRC-State-Übergang zum CELL_DCH state noch aktuell sind, wird dies der Mobilstation vorzugsweise signalisiert und die Mobilstation kann dann diese Ressourcen nutzen.

In einer Variante des Verfahrens speichern Mobilstation und RNC die Informationen über die ,alten' DCH Ressourcen beim Übergang der Mobilstation in den CELL_PCH/URA_PCH nicht, sondern es werden vorzugsweise vordefinierte dedizierte Ressourcen bzw. Ressourcen-Klassen signalisiert bzw. konfiguriert, auf deren Basis eine Mobilstation bei einem erneuten Übergang zum CELL_DCH state seine Nachrichten überträgt. Für die vordefinierten dedizierten Ressourcen bzw. Ressourcen-Klassen können bestimmte Minimum-Anforderung definiert werden, die auf den ,alten' DCH Ressourcen basieren. Beispielsweise können über diese vordefinierten dedizierten Ressourcen bzw. Ressourcen-Klassen bestimmte Parameter der physikalischen Schicht für Uplink und Downlink konfiguriert werden, wie z.B. Spreizfaktor, Channelisation Code-Nummer, Scrambling Code etc. Eine Anweisungsnachricht über die zu verwendenden dedizierten Ressourcen kann mittels einer erweiterten Paging-Nachricht auf dem Benachrichtigungskanal PCH von dem RNC zur Mobilstation gesendet werden.

In Tabelle 2 sind beispielsweise für den UMTS FDD-Modus die Parameter von 2 dedizierten physikalischen Ressourcen-Klassen dargestellt, die insbesondere in Uplink-Richtung auf den 'alten' DCH Ressourcen basieren. Mit der Ressourcen-Klasse 1 wird der MS für den Uplink und Downlink jeweils ein 64kbps Paketdienst und mit der Ressourcen-Klasse 2 für den Uplink und Downlink jeweils ein 32kbps Paketdienst konfiguriert.

**Tabelle 2: Konfiguration von 2 dedizierten physikalischen Ressourcen-Klassen in Uplink und Downlink**

| **Parameter** | **Wert** |
|---|---|
| Ressourcen-Klasse 1: | |
| >Uplink: | |
| >>Scrambling Code-Typ: | Long |
| >>Scrambling Code-Nummer: | 214 |
| >>Spreizfaktor: | 16 |
| >Downlink: | |
| >>Scrambling Code-Nummer: | 3 (=Secondary Scrambling Code 3) |
| >>Spreizfaktor: | 32 |
| >>Channelisation Code-Nummer: | 21 |
| Ressourcen-Klasse 2: | |
| >Uplink: | |
| >>Scrambling Code-Typ: | Long |
| >>Scrambling Code-Nummer: | 214 |
| >>Spreizfaktor: | 32 |
| >Downlink: | |
| >>Scrambling Code-Nummer: | 4 (=Secondary Scrambling Code 4) |
| >>Spreizfaktor: | 64 |
| >>Channelisation Code-Nummer: | 55 |

Die Erfindung bzw. ihre Weiterbildungen haben auch den Vorteil, dass der direkte Übergang von CELL_PCH bzw. URA_PCH zum CELL_DCH state (kein ,Umweg' über CELL_FACH state) wesentlich schneller ist, da die Übertragungsverzögerung infolge der RACH-Übertragung entfällt. Die zu übertragende Datenmenge auf der Luftschnittstelle hinsichtlich der RRC-Signalisieung wird erheblich reduziert, da die Informationen über die dedizierten Ressourcen im Mobilstation und im Netzwerk gespeichert sind und nicht jedes mal neu übertragen werden müssen. Außerdem ist eine Realisierung bzw. Implementierung des erfindungsgemäßen Verfahrens einfach möglich.

Die Erfindung wird im Folgenden anhand bevorzugter Ausführungsbeispiele näher beschrieben, zu deren Erläuterung nachstehend aufgelistete Figur dient:
Figur 1 Schichtenmodell einer Luftschnittstelle;
Figur 2 RRC-Zustands-Übergangsdiagramm;
Figur 3 Ablaufdiagramm eines RRC-Zustand-Wechsels (Beispiel 1);
Figur 4 Ablaufdiagramm eines RRC-Zustand-Wechsels (Beispiel 2).

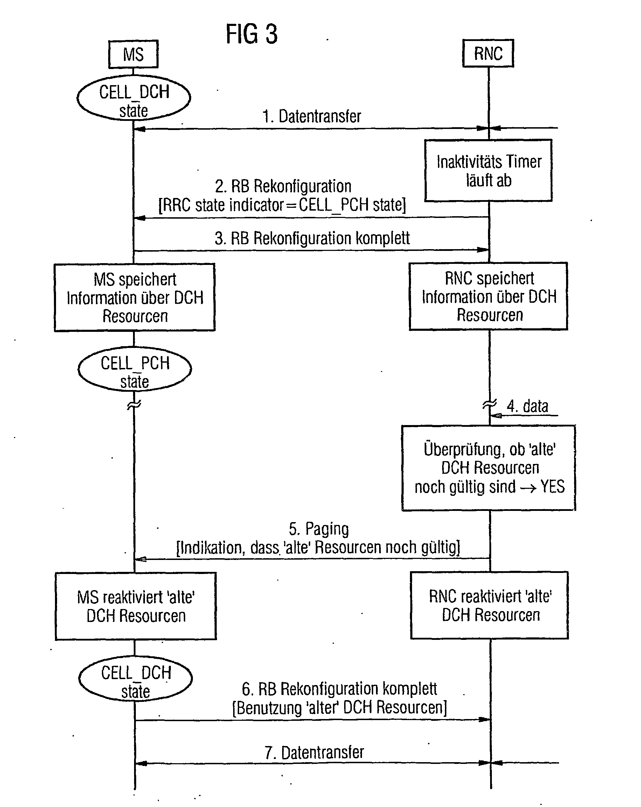

Im ersten Ausführungsbeispiel soll die Signalisierung zwischen Netzwerk, insbesondere einer Funkkontrolleinheit RNC, und der Mobilstation MS für das erfindungsgemäße Verfahren beispielhaft dargestellt werden (Figur 3). Im Folgenden werden die Schritte eines Ablaufs eines RRC-Zustand-Wechsels beschrieben:
Zunächst befindet sich die Mobilstation MS im CELL_DCH state. Es wird ein Anwendungsszenario im UMTS FDD-Modus betrachtet, in dem die MS für den Uplink und Downlink jeweils einen 128kbps Paketdienst nutzt. Die Parameter der dedizierten physikalischen Funkressourcen sind in Tabelle 1 angegeben.

1. Es findet ein Datenaustausch zwischen Mobilstation und RNC statt.
   Es findet kein Datenaustausch mehr statt und ein Timer, der die Inaktivität erfasst läuft ab.
2. Der RNC sendet eine RRC Nachricht ,RB Rekonfiguration' an die Mobilstation MS, welche u.a. den ,RRC state indicator' enthält, der der Mobilstation den Übergang in den CELL_PCH anordnet.
3. Die Mobilstation antwortet mit einer RRC Nachricht ,RB Rekonfiguration komplett'.
   Nun speichern sowohl die Mobilstation als auch der RNC die Informationen über die ,alten' DCH Ressourcen. Anschließend bauen RNC und Mobilstation die physikalische Funkverbindung ab, und die Mobilstation wechselt wie angeordnet in den CELL_PCH state.
4. Der RNC empfängt erneut Daten für die Mobilstation MS.
   Der RNC überprüft, ob die ,alten' DCH Ressourcen noch aktuell sind, d.h. ob diese Ressourcen in der Funkzelle noch gültig bzw. verfügbar sind. Für dieses Ausführungsbeispiel sei angenommen, dass die Ressourcen noch verfügbar sind.
5. Der RNC sendet der Mobilstation eine Benachrichtigung 'Paging' über einen eingehenden Anruf auf dem PCH und eine Indikation darüber, dass die in der Mobilstation gespeicherten Informationen über die ,alten' DCH Ressourcen noch verfügbar sind.
   Der RNC und die Mobilstation reaktivieren nun die ,alten' DCH Ressourcen, und in der physikalischen Schicht von RNC und MS beginnt der Aufbau der dedizierten physikalischen Funkverbindung.
   Die Mobilstation wechselt wieder in den CELL_DCH state.
6. Als Antwort, dass die Mobilstation das Paging (Nachricht 5) erhalten hat und wieder in den CELL_DCH state gewechselt ist, sendet die Mobilstation nun eine RRC Nachricht 'RB Rekonfiguration komplett' an den RNC. Diese Nachricht wird bereits wieder über die dedizierten Ressourcen übertragen.
7. Es findet über die dedizierten Ressourcen ein Datenaustausch zwischen der Mobilstation und dem RNC statt.

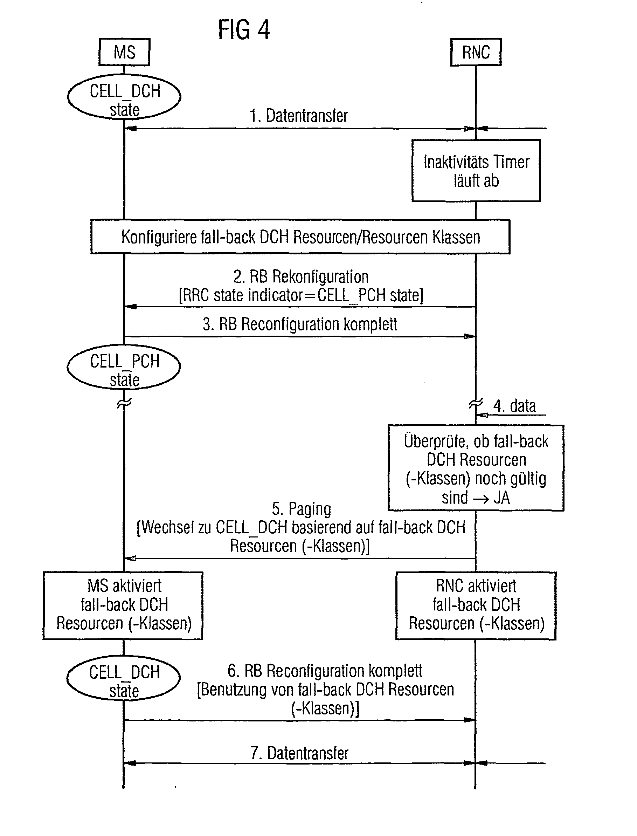

Figur 4 zeigt die Schritte des Ablaufs eines zweiten Ausführungsbeispiels.

Die Mobilstation MS befindet sich zunächst im CELL_DCH state. Es wird wieder das Anwendungsszenario im UMTS FDD-Modus betrachtet, in der die MS für den Uplink und Downlink jeweils ein 128kbps Paketdienst nutzt. Die Parameter der dedizierten physikalischen Funkressourcen sind in Tabelle 1 angegeben.
1. Es findet ein Datenaustausch zwischen der Mobilstation und RNC statt.
   Es findet kein Datenaustausch mehr statt, und ein Timer, der die Inaktivität erfasst (Inaktivitäts Timer) läuft ab.
   In dieser Variante des Verfahrens werden nun durch eine entsprechende Signalisierung zwischen der Mobilstation und dem RNC DCH-Ressourcen konfiguriert, über welche die Mobilstation und der RNC bei einem späteren erneuten Wechsel in den CELL_DCH state initial Daten übertragen können (fall-back DCH Ressourcen). Diese fall-back DCH Ressourcen genügen dabei bestimmten Minimum-Anforderungen und können auf den ,alten' Ressourcen, d.h. den Ressourcen, welche der Mobilstation vor dem State-Übergang zugeordnet waren, basieren. Im Folgenden wird eine Konfiguration nach Tabelle 2 betrachtet, bei der zwei fall-back Ressourcen-Klassen für die MS definiert sind.
   Gemäß einer Ausführungsvariante der Erfindung kann dieser Schritt der Konfiguration der dedizierten Ressourcen-Klassen in der Mobilstation und dem RNC auch zu einem früheren Zeitpunkt (z.B. vor Nachricht 1) ausgeführt werden.
2. Der RNC sendet eine RRC Nachricht ,RB Rekonfiguration an MS, welche u.a. den ,RRC state indicator' enthält, der Mobilstation den Übergang in den CELL_PCH anordnet.
3. Die Mobilstation antwortet mit einer RRC Nachricht ,RB Rekonfiguration komplett'.
   Anschliessend bauen RNC und Mobilstation die physikalische Funkverbindung ab, unddie Mobilstation wechselt in den CELL_PCH state.
4. Der RNC empfängt erneut Daten für MS.
   Der RNC überprüft, ob und welche der fall-back DCH Ressourcen noch aktuell sind, d.h. ob und welche dieser Ressourcen in der Funkzelle noch verfügbar sind. Für dieses Ausführungsbeispiel sei angenommen, dass beide Ressourcen-Klassen noch verfügbar sind.
5. Der RNC sendet der Mobilstation eine Benachrichtigung 'Paging' über einen eingehenden Anruf auf dem PCH und eine Indikation darüber, dass die Mobilstation in den CELL_DCH state wechseln und die vorab konfigurierte fall-back DCH Ressourcen-Klasse 1 nutzen soll.
   RNC und Mobilstation aktivieren nun die fall-back DCH Ressourcen-Klasse 1, und in der physikalischen Schicht von RNC und MS beginnt der Aufbau der dedizierten physikalischen Funkverbindung. Die Mobilstation wechselt wieder in den CELL_DCH state.
6. Als Antwort, dass die Mobilstation das Paging (Nachricht 5) erhalten und wieder in den CELL_DCH state gewechselt ist, sendet die Mobilstation nun eine RRC Nachricht ,RB Rekonfiguration komplett' an RNC. Diese Nachricht wird bereits wieder über die fall-back DCH Ressourcen-Klasse 1 übertragen.
7. Es findet initial über die fall-back DCH Ressourcen-Klasse 1 ein Datenaustausch zwischen Mobilstation und RNC statt.

Neben den oben erläuterten Ausführungsvarianten der Erfindung liegt eine Vielzahl weiterer Ausführungsvarianten im Rahmen der Erfindung, welche hier nicht weiter beschrieben werden, aber anhand der erläuterten Ausführungsbeispiele einfach in die Praxis umgesetzt werden können.

Im Rahmen dieser Anmeldung werden folgende Abkürzungen verwendet:
- BMC: Broadcast / Multicast Control
- DCH: Dedicated Channel
- FACH: Forward Access Channel
- kbps: kilo bits per second
- MAC: Medium Access Control
- PCH: Paging Channel
- PDCP: Packet Data Convergence Protocol
- PHY: Physical Layer
- RACH: Random Access Channel
- RB: Radio Bearer
- RLC: Radio Link Control
- RNC: Radio Network Controller
- RRC: Radio Resource Control
- SRB: Signalling Radio Bearer.

Im Rahmen dieser Anmeldung wird auf folgende Dokumente verwiesen:
[1] TS 25.331, Radio Resource Control (RRC), Protocol Specification

## Patentansprüche

1. Verfahren zur Steuerung der einer Mobilstation zugeordneten Funkressourcen,
bei dem die Mobilstation in verschiedene Betriebszustände geschaltet wird,
bei dem die Mobilstation in einen dedizierten Datenzustand (CELL_DCH) geschaltet wird, in dem der Mobilstation dedizierte Funkressourcen zur Übertragung von Signalisierungsdaten und Nutzdaten zugewiesen sind,
bei dem die Mobilstation in einen gemeinsamen Funkruf-Signalisierungszustand (CELL_PCH, URA_PCH) geschaltet wird, in dem der Mobilstation gemeinsame Funkressourcen zur Übertragung von Signalisierungsdaten zugewiesen sind, und bei dem die Mobilstation ohne Zwischenschaltung eines anderen Betriebszustandes von einem gemeinsamen Funkruf-Signalisierungszustand (CELL_PCH oder URA_PCH) in den dedizierten Datenzustand (CELL_DCH) geschaltet wird, **dadurch gekennzeichnet,**
**daß** beim Schalten der Mobilstation vom dedizierten Datenzustand in einen gemeinsamen Funkruf-Signalisierungszustand Funkressourcen-Informationen, welche die in dem dedizierten Datenzustand von der Mobilstation genutzten dedizierten Funkressourcen beschreiben, in der Mobilstation und in einer Funkkontrolleinheit abgespeichert werden,
**daß** vor einem Schalten der Mobilstation in den dedizierten Datenzustand von der Funkkontrolleinheit überprüft wird, ob die durch die Funkressourcen-Informationen beschriebenen dedizierten Funkressourcen verfügbar sind, und
**daß** der Mobilstation die durch die Funkressourcen-Informationen beschriebenen dedizierten Funkressourcen zugewiesen werden, wenn sie verfügbar sind.

2. Verfahren nach Anspruch 1,
bei dem die genannten Funkressourcen-Informationen anstelle von der Mobilstation genutzter dedizierter Funkressourcen dedizierte fall-back Funkressourcen beschreiben, die auf den in dem dedizierten Datenzustand von der Mobilstation genutzten dedizierten Funkressourcen basieren, wobei vor einem Schalten der Mobilstation in den dedizierten Datenzustand von der Funkkontrolleinheit überprüft wird, ob die durch die Funkressourcen-Informationen beschriebenen dedizierten fall-back Funkressourcen verfügbar sind, und wobei der Mobilstation die durch die Funkressourcen-Informationen beschriebenen dedizierten fall-back Funkressourcen zugewiesen werden, wenn sie verfügbar sind.

3. Verfahren nach einem der vorhergehenden Ansprüche,
bei dem nach dem Schalten der Mobilstation von dem dedizierten Datenzustand in einen gemeinsamen Funkruf-Signalisierungszustand ohne Zwischenschaltung eines anderen Betriebszustandes der Mobilstation dedizierte Funkressourcen zur Übertragung von Signalisierungsdaten und Nutzdaten zugewiesen werden, die der Mobilstation und der Funkkontrolleinheit bekannt sind.

4. Funk-Kommunikationssystem
mit einer Mobilstation und einer Funkkontrolleinheit, die derart eingerichtet sind,
daß die Mobilstation in verschiedene Betriebszustände geschaltet wird,
daß die Mobilstation in einen dedizierten Datenzustand geschaltet wird, in dem der Mobilstation dedizierte Funkressourcen zur Übertragung von Signalisierungsdaten und Nutzdaten zugewiesen sind,
daß die Mobilstation in einen gemeinsamen Funkruf-Signalisierungszustand geschaltet wird, in dem der Mobilstation gemeinsame Funkressourcen zur Übertragung von Signalisierungsdaten zugewiesen sind, und
daß die Mobilstation ohne Zwischenschaltung eines anderen Betriebszustandes von einem gemeinsamen Funkruf-Signalisierungszustand in den dedizierten Datenzustand geschaltet wird,
**dadurch gekennzeichnet,**
**daß** beim Schalten der Mobilstation vom dedizierten Datenzustand in einen gemeinsamen Funkruf-Signalisierungszustand Funkressourcen-Informationen, welche die in dem dedizierten Datenzustand von der Mobilstation genutzten dedizierten Funkressourcen beschreiben, in der Mobilstation und in einer Funkkontrolleinheit abgespeichert werden,
**daß** vor einem Schalten der Mobilstation in den dedizierten Datenzustand von der Funkkontrolleinheit überprüft wird, ob die durch die Funkressourcen-Informationen beschriebenen dedizierten Funkressourcen verfügbar sind, und
**daß** der Mobilstation die durch die Funkressourcen-Informationen beschriebenen dedizierten Funkressourcen zugewiesen werden, wenn sie verfügbar sind.

## Claims

1. Method for controlling the radio resources associated with a mobile station, wherein the mobile station is switched to various operating states,
wherein the mobile station is switched to a dedicated data state (CELL_DCH) in which the mobile station is assigned dedicated radio resources for the transmission of signalling data and user data,
wherein the mobile station is switched to a common radio call signalling state (CELL_PCH, URA_PCH) in which the mobile station is assigned common radio resources for the transmission of signalling data and
wherein the mobile station is switched without interposition of another operating state from a common radio call signalling state (CELL_PCH or URA_PCH) to the dedicated data state (CELL_DCH),
**characterised in that**
when the mobile station is switched from the dedicated data state to a common radio call signalling state, radio resource information which describes the dedicated radio resources used by the mobile station in the dedicated data state is stored in the mobile station and in a radio control unit,
that before the mobile station is switched to the dedicated data state the radio control unit checks whether the dedicated radio resources described by the radio resource information are available, and
that the mobile station is assigned the dedicated radio resources described by the radio resource information, if they are available.

2. Method according to claim 1,
wherein the said radio resource information describes, instead of dedicated radio resources used by the mobile station,
dedicated fall-back radio resources which are based on the dedicated radio resources used by the mobile station in the dedicated data state, wherein before the mobile station is switched to the dedicated data state the radio control unit checks whether the dedicated fall-back radio resources described by the radio resource information are available, and wherein the mobile station is assigned the dedicated fall-back resources described by the radio resource information, if they are available.

3. Method according to one of the preceding claims,
wherein after the mobile station is switched from the dedicated data state to a common radio call signalling state without interposition of another operating state, the mobile station is assigned dedicated radio resources for the transmission of signalling data and user data which are known to the mobile station and the radio control unit.

4. Radio communication system
with a mobile station and a radio control unit which are set up such that
the mobile station is switched to different operating states, that the mobile station is switched to a dedicated data state in which the mobile station is assigned dedicated radio resources for the transmission of signalling data and user data,
that the mobile station is switched to a common radio call signalling state in which the mobile station is assigned common radio resources for the transmission of signalling data, and
that the mobile station is switched without interposition of another operating state from a common radio call signalling state to the dedicated data state,
**characterised in that**
when the mobile station is switched from the dedicated data state to a common radio call signalling state, radio resource information which describes the dedicated radio resources used by the mobile station in the dedicated data state is stored in the mobile station and in a radio control unit,
that before the mobile station is switched to the dedicated data state the radio control unit checks whether the dedicated radio resources described by the radio resource information are available, and
that the mobile station is assigned the dedicated radio resources described by the radio resource information, if they are available.

## Revendications

1. Procédé de commande des ressources radio associées à une station mobile, dans lequel :
la station mobile est commutée dans différents états de fonctionnement;
la station mobile est commutée dans un état de données dédié (CELL_DCH) dans lequel des ressources radio dédiées sont affectées à la station mobile pour la transmission de données de signalisation et de données utiles;
la station mobile est commutée dans un état commun de signalisation d'appel radio (CELL_PCH, URA_PCH) dans lequel des ressources radio communes sont affectées à la station mobile pour la transmission de données de signalisation; et
la station mobile est commutée, sans commutation intermédiaire d'un autre état de fonctionnement, d'un état commun de signalisation d'appel radio (CELL_PCH ou URA_PCH) à l'état de données dédié (CELL_DCH),
**caractérisé en ce que** :
lors de la commutation de la station mobile de l'état de données dédié à un état commun de signalisation d'appel radio, des informations de ressources radio qui décrivent les ressources radio dédiées utilisées par la station mobile dans l'état de données dédié sont sauvegardées dans la station mobile et dans une unité de contrôle radio;
l'unité de contrôle radio vérifie, avant de commuter la station mobile à l'état de données dédié, si les ressources radio dédiées décrites par les informations de ressources radio sont disponibles; et
les ressources radio dédiées décrites par les informations de ressources radio sont affectées à la station mobile lorsqu'elles sont disponibles.

2. Procédé selon la revendication 1, dans lequel lesdites informations de ressources radio décrivent, au lieu de ressources radio dédiées utilisées par la station mobile, des ressources radio dédiées fall-back qui se basent sur les ressources radio dédiées utilisées par la station mobile dans l'état de données dédié, l'unité de contrôle radio vérifiant, avant une commutation de la station mobile à l'état de données dédié, si les ressources radio dédiées fall-back décrites par les informations de ressources radio sont disponibles, et les ressources radio dédiées fall-back décrites par les informations de ressources radio étant affectées à la station mobile lorsqu'elles sont disponibles.

3. Procédé selon l'une des revendications précédentes, dans lequel des ressources radio dédiées sont affectées à la station mobile pour la transmission de données de signalisation et de données utiles après la commutation de la station mobile de l'état de données dédié à un état commun de signalisation d'appel radio sans commutation intermédiaire d'un autre état de fonctionnement.

4. Système de communication radio avec une station mobile et une unité de contrôle radio qui est aménagée de manière telle que :
la station mobile est commutée dans différents états de fonctionnement;
la station mobile est commutée dans un état de données dédié dans lequel des ressources radio dédiées sont affectées à la station mobile pour la transmission de données de signalisation et de données utiles;
la station mobile est commutée dans un état commun de signalisation d'appel radio dans lequel des ressources radio communes sont affectées à la station mobile pour la transmission de données de signalisation; et
la station mobile est commutée, sans commutation intermédiaire d'un autre état de fonctionnement, d'un état commun de signalisation d'appel radio à l'état de données dédié,
**caractérisé en ce que** :
lors de la commutation de la station mobile de l'état de données dédié à un état commun de signalisation d'appel radio, des informations de ressources radio qui décrivent les ressources radio dédiées utilisées par la station mobile dans l'état de données dédié sont sauvegardées dans la station mobile et dans une unité de contrôle radio;
l'unité de contrôle radio vérifie, avant de commuter la station mobile à l'état de données dédié, si les ressources radio dédiées décrites par les informations de ressources radio sont disponibles; et
les ressources radio dédiées décrites par les informations de ressources radio sont affectées à la station mobile lorsqu'elles sont disponibles.
